# EUROPEAN PATENT SPECIFICATION

(11) **EP 1 480 531 B1**
(45) Date of publication and mention of the grant of the patent: **09.04.2008**
(21) Application number: 03706731.1
(22) Date of filing: 25.02.2003
(51) Int. Cl.: A23P 1/08, B05C 19/04

(54) **PRODUCT COATING METHOD AND APPARATUS**
VERFAHREN ZUM BESCHICHTEN EINES PRODUKTES UND VORRICHTUNG
PROCEDE ET APPAREIL D'ENROBAGE DE PRODUITS

(30) Priority: 01.03.2002 GB 0204786
(43) Date of publication of application: 01.12.2004
(73) Proprietor: Spice application systems LTD, Oxford, Oxfordshire OX4 4GH (GB)
(72) Inventor: KING, Peter, Oxfordshire OX4 4YQ (GB)
(74) Representative: Lind, Robert
(86) International application number: PCT/GB2003/000802
(87) International publication number: WO 2003/073876

(56) References cited:
- EP-A- 0 832 695
- GB-A- 2 177 585
- GB-A- 2 286 515
- US-A- 5 287 801
- US-B1- 6 280 798
- US-B1- 6 312 740

## Description

The present invention relates to a method and apparatus for the coating of products and is applicable in particular, though not necessarily, to a method and apparatus for coating food products.

There exists a wide variety of products which require to be coated with a substance (e.g. powder, liquid, suspension, etc) during their preparation. For example, snack foods such as potato crisps and corn chips are usually coated with a flavouring. It is generally desirable to be able to achieve a uniform and controllable coating over the entire surface of a product. It is also desirable to be able to minimise wastage of the coating substance, and to reduce the dispersion of the coating substance into the environment around the products.

A traditional method used for coating snack foods involves the use of a rotating drum which has its axis generally aligned with the horizontal, but with a slight tilt. Products introduced into one end of the drum tend to travel to the other end as the drum rotates. Flavouring in the form of a powder is delivered via an inclined chute to a location within the drum so that the flavouring is sprinkled onto the products to be coated. This technique tends to result in a non-uniform coating of products, with flavour concentration varying between product pieces and across the surfaces of individual pieces.

It has been recognised that coating uniformity may be improved by placing a charge on the powder grains, using for example a wire electrode located in the transit path of the product. If the product delivery mechanism, e.g. a rotating drum, is grounded, the products to be coated will also tend to be grounded as they pass under the flavouring delivery mechanism. Charged flavouring grains will be attracted to the products in a generally uniform manner, in turn resulting in a generally uniform coating.

GB-2 286 515 discloses a method and apparatus for flavouring a food product comprising passing the food product into a region of electric change containing a flavouring compound.

US5,287,801 describes apparatus for coating food products, and which comprises a screw conveyor for delivering a powder coating substance to a delivery chamber. Slots are formed in the base of the delivery chamber so that the delivered substance drops through the slots and falls onto a product delivery conveyor. An electrostatic charging head is located between the delivery chamber and the product delivery conveyor, so that the coating substance falls through an electric field formed by the charging head, acquiring a charge as it does so.

A problem with apparatus of the type described in US5,287,801 is that the slots in the delivery chamber can become blocked, particularly where the surrounding environment is hot and possibly humid (this is often the case in a food production facility). A further potential problem is that the coating substance is not broken down into sufficiently small grains by the delivery system. Again, this problem may be exacerbated by a warm and humid atmosphere.

An alternative electrostatic coating apparatus comprises a venturi tube through which the coating substance is forced by a pressurised gas. Upon emerging from an exit nozzle, the substance passes over a charging electrode. Again, a blockage problem can arise as the coating substance building up within the venturi tube. Such blockage results in production downtime, increasing operating costs and decreasing productivity.

According to a first aspect of the present invention there is provided a method of coating a product, carried on a surface of a delivery mechanism, with a coating substance, the method comprising:
delivering the coating substance to a location above said surface carrying said product via an inclined chute down which the coating substance falls under gravity;
allowing the coating substance to fall under gravity in the direction of said surface from the end of the inclined chute;
during its fall under gravity, and substantially immediately beneath the exit end of said inclined chute, subjecting the coating substance to at least one pressurised gas stream, whereby the falling coating substance is dispersed, and to an electric field, whereby the coating substance is charged.

In accordance with a further aspect of the present invention, there is provided an apparatus for coating a product, carried on a surface of a delivery mechanism, with a coating substance, the apparatus comprising:
an inclined chute for conveying the coating substance to a location above said surface carrying said product, an exit end of the chute being suitable for siting above said surface;
a gas jet nozzle for location substantially immediately beneath the exit end of the chute;
an electrode attached to or located adjacent to said nozzle;
a source of pressurised gas and means for coupling said source to said gas jet nozzle; and
means for charging said electrode;
wherein in use gas ejected from said nozzle passes over said electrode and is charged, and impinges on the coating substance falling from the exit end of the chute.

The present invention is applicable in particular to the coating of snack food products with a dry, powdered flavouring. However, the invention may also be used to coat other products including, but not limited to, pharmaceuticals. The invention may also be used to coat products with substances other than dry powdered substances including, for example, liquids and suspensions.

An advantage of the present invention is that the mechanism for delivering the coating substance to a location above the product delivery surface can be made relatively simple. As a pressurised gas is used to disperse the coating substance, there is no need for fine delivery slots or holes which can become easily blocked.

Preferably, the chute is vibrated or shaken both to disperse the coating substance and to aid transfer of the substance along the chute. Preferably, an exit end of the chute has a width of 75mm or less.

The coating substance may be delivered to said chute from a supply tank or hopper using, for example, a screw conveyor.

Preferably, the coating substance is subjected to said at least one pressurised gas stream and to said electric field immediately beneath an exit end of the chute.

Preferably, said gas jet nozzle is attached to an underside of the conveyor, so that said nozzle is located directly beneath the exit end of the conveyor. More preferably, any of said gas jet nozzle, said electrode, said source of pressurised gas and said charging means are substantially decoupled from the remainder of said apparatus. An advantage of decoupling these components is that the electrical connections therein are then not subject to the vibrations that they might otherwise be subject to when coupled to the chute.

A needle electrode will generate a charging field which is more efficient at charging a gas or liquid ejected from the nozzle, than alternative electrode designs such as a wire electrode. Preferably, the needle electrode is relatively short, e.g. 1mm or less.

It will be appreciated that the design of the apparatus makes it easy to change the jet nozzle, e.g. from a nozzle designed to spray gas to a nozzle designed to spray liquid.

Preferably, there is provided a nozzle holder to which the jet nozzle can be removably attached;
a needle electrode attached to the nozzle holder and means for coupling the electrode to a high voltage charging means; and
the needle electrode being located such that in use when gas or liquid is ejected from the nozzle the gas or liquid passes through an electric field created by the electrode.

For a better understanding of the present invention and in order to show how the same may be carried into effect, reference will now be made to the accompanying drawings in which:
Figure 1 illustrates in partial cross-section apparatus for coating a snack food with a flavouring;
Figure 2 illustrates a nozzle and nozzle mounting member of the apparatus of Figure 1; and
Figure 3 is a flow diagram illustrating a method of coating a snack food with a flavouring;
Figure 4 illustrates in partial cross-section the apparatus of Figure 1 with the apparatus of Figure 2 substantially decoupled from the main body of the apparatus; and
Figure 5 illustrates in side view the apparatus of Figure 2 with the electrode and charging means of the apparatus substantially decoupled from the nozzle and nozzle mounting member of the apparatus.

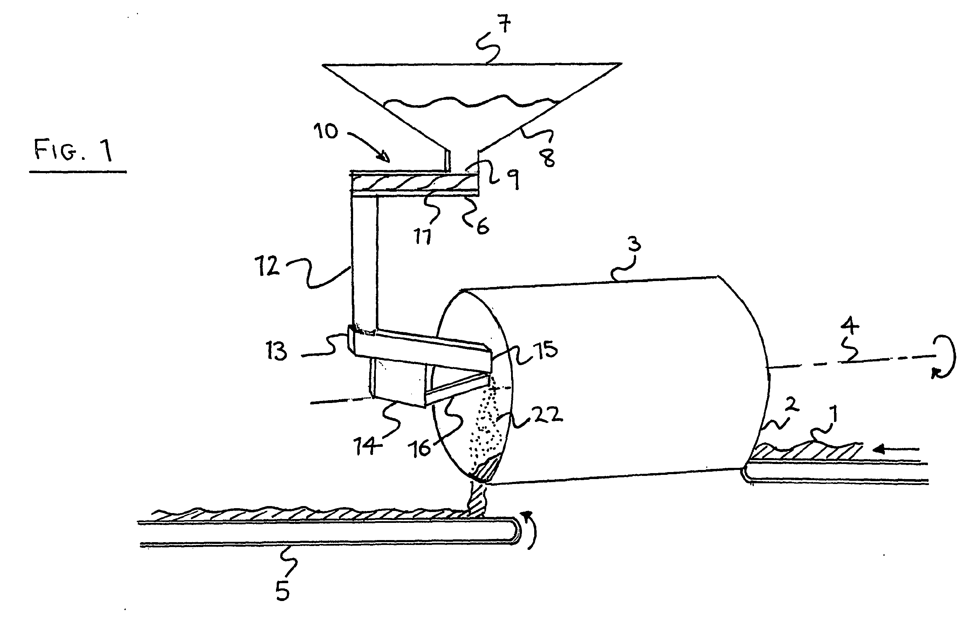

There is illustrated in Figure 1 apparatus for coating a snack food with a flavouring. For the purpose of illustration, it is assumed here that the snack food is potato crisps. Previously baked crisps 1 are fed into an opening 2 at one end of a metal drum 3 which is mounted in a support frame (not shown in the Figure). The drum 3 has its axis 4 oriented substantially horizontally, but tilted at a slight angle (e.g. 10 degrees) thereto, and is rotated (by a mechanism not shown in Figure 1) so that the crisps travel from the end of the drum at which they enter, to the opposite end. The crisps tumble as they travel, until eventually they fall out of the exit end of the drum 3 onto a moving conveyor 5 which delivers the crisps to packaging apparatus (not shown). The drum is connected to ground potential.

Located on top of a support frame (not shown in Figure 1) above the drum 3 is a hopper 7 into which is loaded a dry, powdered flavouring 8. An opening 9 in the base of the hopper 7 is coupled to a screw conveyor 10 which comprises a screw 11 mounted within a cylindrical tube 6. The screw 11 is rotated within the cylindrical tube 6 by a suitable motor. An end of the screw conveyor 10 leads into a vertically oriented feed tube 12, the open lower end of which is located directly above an inclined chute 13. Coupled to an underside of the chute 13 is a vibration motor 14 arranged to vibrate the chute at a relatively high frequency but with a relatively small amplitude. The motor 14 may be for example a model FoodTech FTO1 supplied by FMC.

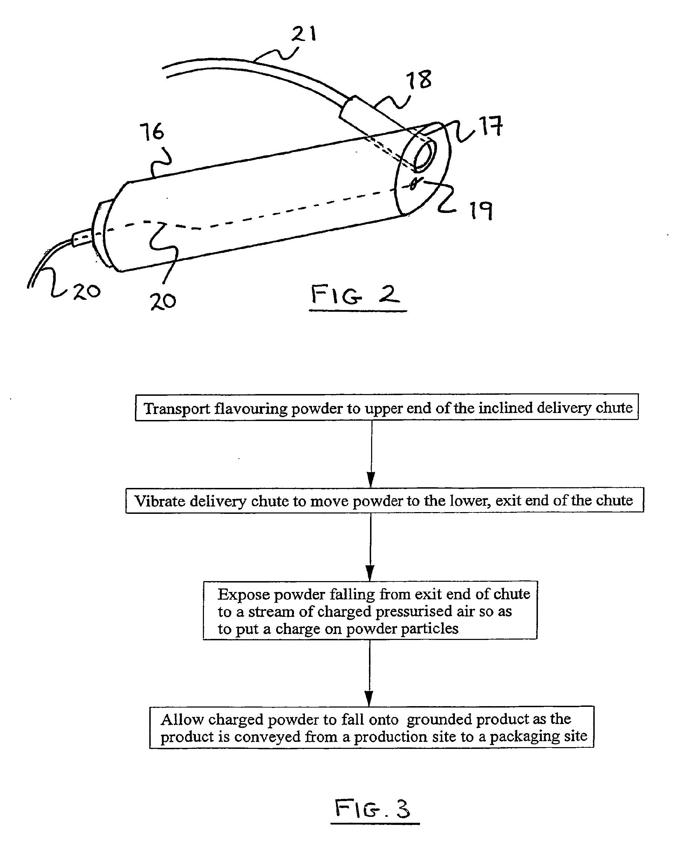

The lower or exit end 15 of the chute 13 projects into the centre of the drum 3, the exit end having a width of about 25 to 75mm. A nozzle mounting 16 is located beneath the lower end of the chute 13, and is illustrated in more detail in Figure 2. The nozzle mounting 16 comprises a single moulded piece of plastics material, having a generally cylindrical passage 17 passing therethrough, close to one end of the mounting 16. The passage is designed to receive a complimentary shaped and sized nozzle 18 which, once inserted into the passage 17, can be secured therein with a screw, clip, or similar fastening.

Fixed into the mounting 16 is a short needle electrode 19, located in the passage 17 just beneath the mouth of the nozzle 18. The electrode 19 is coupled via a conductor 20 to a high voltage charging circuit (for example a cascade arrangement). In use, the electrode is charged up to a voltage of around 85KV. An end of the nozzle 18 is coupled via a hose 21 to a source of pressurised air (not shown in the figures). The nozzle mounting 16 and the various components attached thereto are designed to withstand the high ambient levels of heat and moisture, and to be suitable for use on a food production line. A suitable control unit is used to control the pressure of air supplied to the nozzle 18 and the voltage applied to the electrode 19.

Having explained the structure of the apparatus with reference to Figures 1 and 2, the operation of the apparatus will now be described. With the hopper 7 loaded with flavouring powder 8, the screw conveyor 10 is operated to drive powder 8 into the top of the feed pipe 12. Powder drops through the pipe 12 and lands on the chute 13. Due to the inclined angle of the chute and the vibration of the chute by the motor 14, the powder 8 is conveyed along the chute to its exit end 15. It will be appreciated that vibration of the powder within the chute will result in some dispersion of the powder, i.e. larger lumps will tend to be broken up into smaller lumps or grains.

As the powdered flavouring 8 reaches the exit end 15 of the chute 13, it will spill over the edge and will begin falling under gravity (as indicated by reference numeral 22 in Figure 1). Directly beneath the exit end 15 of the chute, pressurised air is forced through the nozzle 18 and passes through the electric field created by the charged electrode 19. The air becomes charged as it passes through this field. The charged air then impacts on the falling powder 8, tending to disperse the powder and to break up particles to into micro sizes (i.e. 45-75 microns in diameter). The air also imparts a charge to the powder particles and grains. It is noted that smaller particles (i.e. of micron sizes) accept a charge more easily than larger particles.

As the drum 3 is grounded, the crisps 1 travelling through the drum will also be grounded. The falling, charged powder particles and grains will therefore be accelerated towards the crisps 1, landing on the crisps and coating their exposed surfaces. Due to the electrostatic forces, even back and undersides of the crisps will tend to be coated, resulting in a relatively uniform surface coating. The method described above is further illustrated in the flow diagram of Figure 3.

It will be appreciated that the apparatus and method described above do not require any small aperture components, e.g. Venturi tubes, slots, or holes, through which the flavouring powder must pass. There is therefore little likelihood of components becoming blocked, resulting in less downtime and higher productivity.

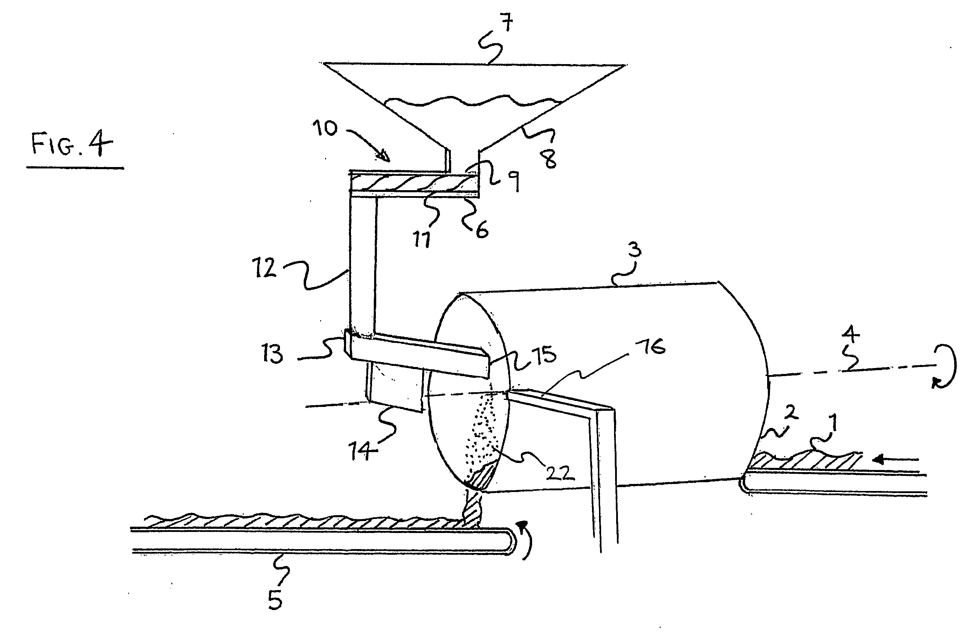

A further embodiment of the invention is illustrated in Figure 4. All aspects of the apparatus as illustrated in Figures 1 and 2 are present, the sole difference being that the nozzle mounting 16 and all components therein are decoupled from the remainder of the apparatus. It will be appreciated that the potentially fragile connections within the nozzle mounting, notably the means for charging the electrode 19, are then not subject to the vibrations of the chute 13.

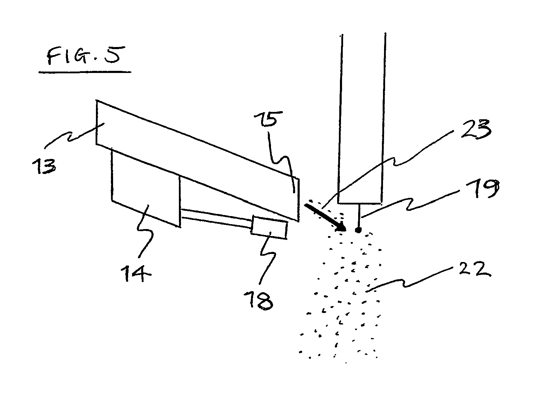

A further embodiment of the invention, as illustrated in Figure 5, also adopts this approach. All aspects of the apparatus as illustrated in Figure 1 are present. The electrode 19 and its charging means, however, are substantially decoupled from the remainder of the nozzle 18 and nozzle mounting member and lie in the path of the falling coating substance. The electrode and its charging means are again isolated from the vibrations of the chute 13. The electrode is positioned substantially proximate to the end 15 of the chute such that a substantial proportion of the falling coating substance is charged. The direction of motion of the coating substance is indicated by arrow 23.

It will be appreciated by the person of skill in the art that various modifications may be made to the above described embodiment without departing from the scope of the present invention. For example, where larger amounts of flavouring must be delivered on top of the product to be coated, a wider chute or multiple chutes, arranged side by side, may be used. A corresponding set of nozzles may be employed to charge and disperse the flavouring. Alternatively, a wide mouthed knife nozzle may be used.

## Claims

1. A method of coating a product, carried on a surface of a delivery mechanism, with a coating substance, the method comprising:
delivering the coating substance to a location above said surface carrying said product via an inclined chute down which the coating substance falls under gravity;
allowing the coating substance to fall under gravity in the direction of said surface from the end of the inclined chute;
during its fall under gravity, and substantially immediately beneath the exit end of said inclined chute, subjecting the coating substance to at least one pressurised gas stream, whereby the falling coating substance is dispersed, and to an electric field, whereby the coating substance is charged.

2. A method according to claim 1 and comprising vibrating or shaking the chute to disperse the coating substance and to aid transfer of the substance along the chute.

3. A method according to claim 1 or 2, wherein the pressurised gas stream is subjected to said electric field prior to impinging upon the coating substance.

4. A method according to any one of claims 1 to 3, wherein the pressurised gas stream impinges upon the coating substance prior to subjection to said electric field.

5. Apparatus for coating a product, carried on a surface of a delivery mechanism, with a coating substance, the apparatus comprising:
an inclined chute for conveying the coating substance to a location above said surface carrying said product, an exit end of the chute being suitable for siting above said surface;
a gas jet nozzle for location substantially immediately beneath the exit end of the chute;
an electrode attached to or located adjacent to said nozzle;
a source of pressurised gas and means for coupling said source to said gas jet nozzle; and
means for charging said electrode;
wherein in use gas ejected from said nozzle passes over said electrode and is charged, and impinges on the coating substance falling from the exit end of the chute.

6. Apparatus according to claim 5 and comprising means for vibrating or shaking the chute.

7. Apparatus according to claim 5 or 6, wherein in use the gas ejected from said nozzle passes over said electrode prior to impinging upon the coating substance.

8. Apparatus according to any one of claims 5 to 6, wherein in use the gas ejected from said nozzle impinges upon the coating substance prior to passing over said electrode.

9. Apparatus according to claim 5 and comprising:
a nozzle, holder to which the jet nozzle can be removably attached;
a needle electrode attached to the nozzle holder and means for coupling the electrode to a high voltage charging means; and
the needle electrode being located such that in use when gas or liquid is ejected from the nozzle the gas or liquid passes through an electric field created by the electrode.

## Patentansprüche

1. Verfahren zum Beschichten eines Produktes, das auf einer Fläche eines Zuführmechanismus getragen wird, mit einer Beschichtungssubstanz, wobei das Verfahren die folgenden Schritte aufweist:
Zuführen der Beschichtungssubstanz zu einer Stelle oberhalb der Fläche, die das Produkt trägt, mittels einer geneigten Rutsche, auf der die Beschichtungssubstanz unter der Schwerkraft nach unten fällt;
Zulassen, dass die Beschichtungssubstanz unter der Schwerkraft in der Richtung der Fläche vom Ende der geneigten Rutsche fällt;
Aussetzen der Beschichtungssubstanz mindestens einem Druckgasstrom während ihres Fallens unter der Schwerkraft und im Wesentlichen unmittelbar unterhalb des Austrittsendes der geneigten Rutsche, wodurch die fallende Beschichtungssubstanz dispergiert wird, und einem elektrischen Feld, wodurch die Beschichtungssubstanz aufgeladen wird.

2. Verfahren nach Anspruch 1, und das den Schritt des Schwingens oder Schüttelns der Rutsche aufweist, um die Beschichtungssubstanz zu dispergieren, und um den Transport der Substanz längs der Rutsche zu unterstützen.

3. Verfahren nach Anspruch 1 oder 2, bei dem der Druckgasstrom dem elektrischen Feld vor dem Auftreffen auf die Beschichtungssubstanz ausgesetzt wird.

4. Verfahren nach einem der Ansprüche 1 bis 3, bei dem der Druckgasstrom auf die Beschichtungssubstanz auftrifft, bevor er dem elektrischen Feld ausgesetzt wird.

5. Vorrichtung zur Beschichtung eines Produktes, das auf einer Fläche eines Zuführmechanismus getragen wird, mit einer Beschichtungssubstanz, wobei die Vorrichtung aufweist:
eine geneigte Rutsche für das Transportieren der Beschichtungssubstanz zu einer Stelle oberhalb der Fläche, die das Produkt trägt, wobei ein Austrittsende der Rutsche für ein Anordnen über der Fläche geeignet ist;
eine Gasstrahldüse für eine Anordnung im Wesentlichen unmittelbar unterhalb des Austrittsendes der Rutsche;
eine Elektrode, die an der Düse befestigt oder benachbart dazu angeordnet ist;
eine Quelle des Druckgases und ein Mittel für das Verbinden der Quelle mit der Gasstrahldüse; und
ein Mittel für das Aufladen der Elektrode;
wobei bei Benutzung das aus der Düse ausgestoßene Gas über die Elektrode gelangt und aufgeladen wird und auf die Beschichtungssubstanz auftrifft, die vom Austrittsende der Rutsche fällt.

6. Vorrichtung nach Anspruch 5, und die außerdem ein Mittel für das Schwingen oder Schütteln der Rutsche aufweist.

7. Vorrichtung nach Anspruch 5 oder 6, bei der bei Benutzung das aus der Düse ausgestoßene Gas über die Elektrode vor dem Auftreffen auf die Beschichtungssubstanz gelangt.

8. Vorrichtung nach einem der Ansprüche 5 bis 6, bei dem bei Benutzung das aus der Düse ausgestoßene Gas auf die Beschichtungssubstanz vor dem Bewegen über die Elektrode auftrifft.

9. Vorrichtung nach Anspruch 5, und die aufweist:
einen Düsenhalter, an dem die Strahldüse entfernbar befestigt werden kann;
eine Nadelelektrode, die am Düsenhalter befestigt ist, und ein Mittel für das Verbinden der Elektrode mit einer Hochspannungsladeeinrichtung; und
wobei die Nadelelektrode so angeordnet wird, dass bei Benutzung, wenn Gas oder Flüssigkeit aus der Düse ausgestoßen wird, das Gas oder die Flüssigkeit durch ein elektrisches Feld gelangt, das durch die Elektrode erzeugt wird.

## Revendications

1. Procédé de revêtement d'un produit, qui est supporté sur une surface d'un mécanisme de délivrance, à l'aide d'une substance de revêtement, le procédé comprenant:
la délivrance de la substance de revêtement jusqu'à une localisation au-dessus de ladite surface qui supporte ledit produit via une goulotte inclinée le long de laquelle la substance de revêtement tombe sous l'effet de la gravité;
l'action consistant à laisser tomber la substance de revêtement sous l'effet de la gravité dans la direction de ladite surface depuis l'extrémité de la goulotte inclinée;
pendant sa chute sous l'effet de la gravité et sensiblement immédiatement au-dessous de l'extrémité de sortie de ladite goulotte inclinée, la soumission de la substance de revêtement à au moins un courant de gaz sous pression et ainsi, la substance de revêtement qui chute est dispersée, ainsi qu'à un champ électrique et ainsi, la substance de revêtement est chargée.

2. Procédé selon la revendication 1 et comprenant la vibration ou le secouage de la goulotte afin de disperser la substance de revêtement et afin de contribuer au transfert de la substance le long de la goulotte.

3. Procédé selon la revendication 1 ou 2, dans lequel le courant de gaz sous pression est soumis audit champ électrique avant une arrivée en incidence sur la substance de revêtement.

4. Procédé selon l'une quelconque des revendications 1 à 3, dans lequel le courant de gaz sous pression arrive en incidence sur la substance de revêtement avant soumission audit champ électrique.

5. Appareil pour revêtir un produit, qui est supporté sur une surface d'un mécanisme de délivrance, à l'aide d'une substance de revêtement, l'appareil comprenant:
une goulotte inclinée pour convoyer la substance de revêtement jusqu'à une localisation au-dessus de ladite surface qui supporte ledit produit, une extrémité de sortie de la goulotte convenant pour un positionnement au-dessus de ladite surface;
un éjecteur de jet de gaz pour une localisation sensiblement immédiatement au-dessous de l'extrémité de sortie de la goulotte;
une électrode fixée audit éjecteur ou localisée de manière à être adjacente à celui-ci;
une source de gaz sous pression et un moyen pour coupler ladite source audit éjecteur de jet de gaz; et
un moyen pour charger ladite électrode,
dans lequel, en utilisation, un gaz éjecté depuis ledit éjecteur passe au-dessus de ladite électrode et est chargé, et arrive en incidence sur la substance de revêtement qui tombe depuis l'extrémité de sortie de la goulotte.

6. Appareil selon la revendication 5 et comprenant un moyen pour vibrer ou secouer la goulotte.

7. Appareil selon la revendication 5 ou 6, dans lequel, en utilisation, le gaz éjecté depuis ledit éjecteur passe au-dessus de ladite électrode avant d'arriver en incidence sur la substance de revêtement.

8. Appareil selon l'une quelconque des revendications 5 et 6, dans lequel, en utilisation, le gaz éjecté depuis ledit éjecteur arrive en incidence sur la substance de revêtement avant de passer au-dessus de ladite électrode.

9. Appareil selon la revendication 5 et comprenant:
un support d'éjecteur sur lequel l'éjecteur de jet peut être fixé de manière amovible;
une électrode en aiguille fixée au support d'éjecteur et un moyen pour coupler l'électrode à un moyen de charge haute tension; et
l'électrode en aiguille étant localisée de telle sorte qu'en utilisation, lorsqu'un gaz ou un liquide est éjecté depuis l'éjecteur, le gaz ou le liquide passe au travers d'un champ électrique créé par l'électrode.
